# EUROPÄISCHE PATENTANMELDUNG

(11) **EP 2 657 474 A1**
(43) Veröffentlichungstag der Anmeldung: **30.10.2013**
(21) Anmeldenummer: 12165747.2
(22) Anmeldetag: 26.04.2012
(51) Int. Cl.: F01N 3/022, F01N 3/035, F01N 13/16

(54) **Beschichteter Partikelfilter, Katalysator und Einrichtung mit denselben**

(71) Anmelder: Kahlert, Bernhard, 5323 Rietheim (CH)
(72) Erfinder: Kahlert, Bernhard, 5323 Rietheim (CH)
(74) Vertreter: Wirnsberger, Gernot

(57) **Zusammenfassung**

Die Erfindung betrifft einen beschichteten Partikelfilter (3), insbesondere Wall-flow-Filter, mit einer Länge (L). Erfindungsgemäß sind entlang der Länge (L) zumindest zwei Zonen (4, 5) vorgesehen, die unterschiedlich beschichtet sind.

Des Weiteren betrifft die Erfindung einen Katalysator (2), wobei der Katalysator (2) mit einer Beschichtung ausgebildet ist, die als untere Beschichtungslage eine Wash-coat-Beschichtungslage aufweist, auf welcher Palladium abgeschieden ist.

Schließlich betrifft die Erfindung eine Einrichtung (1) zum Reinigen von Abgasen, insbesondere Abgasen von dieselbetriebenen Kraftfahrzeugen, umfassend einen Katalysator (2) und einen dem Katalysator (2) stromabwärts nachgeschalteten beschichteten Partikelfilter (3) mit einer Länge (L), wobei der Partikelfilter (3) und der Katalysator (2) erfindungsgemäß ausgebildet sind.

## Beschreibung

Die Erfindung betrifft einen beschichteten Partikelfilter, insbesondere Wall-flow-Filter, mit einer Länge.

Des Weiteren betrifft die Erfindung einen Katalysator, der von Abgasen durchströmbar ist.

Schließlich betrifft die Erfindung eine Einrichtung zum Reinigen von Abgasen, insbesondere Abgasen von dieselbetriebenen Kraftfahrzeugen, umfassend einen Katalysator und einen dem Katalysator stromabwärts nachgeschalteten beschichteten Partikelfilter mit einer Länge.

Mit Benzin oder Diesel betriebene Kraftfahrzeuge stoßen im Betrieb Abgase aus, die mehrere umwelt- und gesundheitsschädliche Komponenten enthalten können. Dazu zählen Kohlenwasserstoffe (HC), Kohlenmonoxid (CO) und Stickoxide (NOₓ). Hinzu kommt bei dieselbetriebenen Kraftfahrzeugen ein Ausstoß von Rußpartikeln.

Um einen Ausstoß schädlicher Komponenten in Abgasen von Kraftfahrzeugen möglichst zu verringern, werden von gesetzgeberischer Seite stetig neue Abgasnormen erlassen, welche immer strengere Anforderungen an die Reinheit eines Abgases stellen. Fahrzeug- und Motorhersteller sind daher gezwungen, in den Abgassystemen von Kraftfahrzeugen Reinigungseinrichtungen vorzusehen, welche die Erfüllung der jeweils geltenden Abgasnorm sicherstellen.

Es gibt seit etwa zwei Jahrzehnten erhebliche Bestrebungen seitens der Automobilindustrie, Kraftfahrzeugabgase im Abgastrakt eines Kraftfahrzeuges zu reinigen. Für dieselbetriebene Kraftfahrzeuge wurde eine aus zwei Komponenten bestehende Reinigungseinrichtung entwickelt, die in einen Abgastrakt eingebaut werden kann bzw. dort eingebaut ist. Diese Reinigungseinrichtung ist als Continuous-Regeneration-Trap-System (CRT-System) bekannt. Eine erste Komponente umfasst einen Katalysator, der so beschichtet ist, dass im Abgas vorhandenes Stickstoffmonoxid (NO) zu Stickstoffdioxid (NO₂) oxidiert wird. Stromabwärts ist eine zweite Komponente nachgeschaltet, die als Partikelfilter dient und im Abgas vorhandene Rußpartikel ausfiltert. Die am Partikelfilter ausgefilterten Rußpartikel setzen sich mit dem zuvor am Katalysator gebildeten oder bereits im Abgas vorhandenen NO unter Verbrennung der Rußpartikel um, wobei NO₂ zu NO reduziert wird. Mit einer derartigen Vorrichtung lassen sich grundsätzlich Rußpartikel aus einem Abgas eines dieselbetriebenen Kraftfahrzeuges gut entfernen. Ein derartiges CRT-System kann sich passiv bzw. selbst regenerieren, sofern erforderliche Temperaturen für eine Verbrennung der Rußpartikel gegeben sind. Zusätzlich kann vorgesehen sein, dass der Partikelfilter aktiv regenerierbar ist, z. B. durch Einspritzen und Verbrennen von Kraftstoff vor dem Katalysator, um den Partikelfilter aufzuheizen und damit die erforderlichen Temperaturen für die Verbrennung der Rußpartikel zu erzielen. Dies ist vor allem dann notwendig, wenn ein Kraftfahrzeug im Stop-and-go-Betrieb betrieben wird, wie dies im innerstädtischen Verkehr häufig zutrifft. In diesem Fall erreicht der Partikelfilter in der Regel nicht die erforderlichen Temperaturen für einen selbsttätigen Rußabbrand. Selbst wenn ein CRT-System Rußpartikel, Kohlenmonoxid und Kohlenwasserstoffe effizient aus einem Abgas entfernen kann, bleiben doch Stickoxide und insbesondere ein hoher Anteil an NO₂ zurück.

Bekannt sind auch Abgasreinigungseinrichtungen, die mit selektiver katalytischer Reduktion (SCR) arbeiten. Bei derartigen Systemen wird in der Regel eine HarnstoffLösung vor einem im Abgastrakt befindlichen Katalysator eingespritzt. Die eingespritzte Harnstofflösung zersetzt sich, wobei Ammoniak entsteht, das am Katalysator mit NO und NO₂ reagiert, sodass der NOₓ-Anteil reduziert wird. Üblicherweise ist am Ende der Reinigungseinrichtung hierfür auch ein Sperrkatalysator vorzusehen, der zur Umwandlung von überschüssigem Ammoniak dient, das ansonsten ausgestoßen werden würde. SCR-Systeme werden üblicherweise bei dieselbetriebenen Kraftfahrzeugen eingesetzt, dies führt aber zu einem sehr komplexen Aufbau einer Reinigungseinrichtung mit vielen Komponenten.

Für dieselbetriebene Kraftfahrzeuge ist es aus dem Stand der Technik bekannt, dass CRT-Systeme nicht nur Rußpartikel ausfiltern, sondern auch HC-Anteile und CO-Anteile stark reduzieren. Darüber hinaus kann auch der NO₂-Anteil am Gesamtanteil von NOₓ auf ein Minimum reduziert werden. Hierfür ist eine spezielle Beschichtung eines in Kombination mit einem vorgeschalteten Katalysator vorgesehenen Partikelfilters erforderlich, wie dies in der EP 2 335 809 A1 offenbart ist. Wenngleich dabei nahezu alle schädlichen Komponenten eines Abgases eines dieselbetriebenen Kraftfahrzeuges entfernt werden können, ist doch nachteilig, dass der NOₓ-Anteil nahezu konstant bleibt, da NO₂ zu NO reduziert wird. Es können daher zwar gegenwärtige Abgasnormen, die bestimmte Grenzwerte für NO₂-Anteile vorsehen, erfüllt werden, nicht jedoch künftige Abgasnormen, die strengere Grenzwerte auch für NO-Anteile vorschreiben.

Aufgabe der Erfindung ist es, einen Partikelfilter der eingangs genannten Art anzugeben, der einfach aufgebaut ist, dennoch aber eine effiziente Reinigung eines Abgases eines Kraftfahrzeuges, insbesondere eines dieselbetriebenen Kraftfahrzeuges, ermöglicht.

Eine weitere Aufgabe der Erfindung besteht darin, einen Katalysator der eingangs genannten Art anzugeben, der insbesondere im Zusammenwirken mit einem nachgeschalteten Partikelfilter eine effiziente Abgasreinigung ermöglicht.

Ein noch weiteres Ziel der Erfindung besteht darin, eine Einrichtung der eingangs genannten Art anzugeben, mit welcher ein Abgas eines Kraftfahrzeuges, insbesondere eines dieselbetriebenen Kraftfahrzeuges, besonders effizient reinigbar ist.

Die erste Aufgabe der Erfindung wird gelöst, wenn bei einem Partikelfilter der eingangs genannten Art entlang der Länge zumindest zwei Zonen vorgesehen sind, die unterschiedlich beschichtet sind.

Durch die erfindungsgemäß vorgesehene zonal unterschiedliche Beschichtung eines Partikelfilters können verschiedene Bereiche auf diesem geschaffen werden, die jeweils verschiedene Funktionen in Bezug auf eine Abgasreinigung erfüllen bzw. selektiv jeweils eine bestimmte Komponente aus dem Abgas entfernen und/oder umwandeln. Dadurch ist es möglich, insbesondere mit einem vorgeschalteten Katalysator, bei einer einfachen Bauweise viele umweltschädliche Komponenten eines Kraftfahrzeugabgases zu entfernen.

Grundsätzlich kann eine beliebige Anzahl von Zonen vorgesehen sein, beispielsweise drei oder mehr Zonen. Der Partikelfilter lässt sich jedoch dann besonders einfach beschichten, wenn zwei Zonen vorgesehen sind, da der Partikelfilter dann in einem Eintauchverfahren beschichtet werden kann. Dazu braucht der Partikelfilter lediglich bis zu einem vorbestimmten Anteil seiner Länge in ein Tauchbad eingeführt werden, um die erste Zone zu beschichten. Anschließend wird der Partikelfilter um 180° gedreht und nochmals in ein anderes Tauchbad zur Erstellung einer Beschichtung in der zweiten Zone eingeführt, wobei das Einführen so weit erfolgt, als der Partikelfilter noch nicht beschichtet ist. Dabei wird die zweite Zone als eine NO zumindest teilweise reduzierende Zone ausgebildet. Dies ermöglicht es, in der ersten Zone Rußpartikel katalytisch zu verbrennen, wohingegen in der zweiten Zone vorhandenes oder gebildetes NO zumindest teilweise reduziert wird. Besonders bevorzugt ist es, dass die erste Zone eine Platin und/oder Palladium enthaltende Beschichtung aufweist. Platin dient dabei einer Oxidation von NO zu NO₂, das für eine Verbrennung von Rußpartikeln erforderlich ist. Dem Palladium wird die Wirkung zugeordnet, dass dieses im Gegensatz zu Platin NO₂ zu NO reduziert. Somit rufen die zwei Metalle bei gleichzeitiger Anwesenheit, die vorgesehen sein kann, an sich gegenläufige Wirkungen hervor. Dennoch wird in der Praxis ein exzellenter Rußabbrand beobachtet. Die genauen Ursachen hierfür durch die kombinierte Anwendung von Platin und Palladium in der Beschichtung sind noch nicht geklärt. Denkbar ist es, dass sich aufgrund der aus einem Sol oder einer Lösung erfolgenden Beschichtung reaktive Metallpartikel abscheiden, die quasi als Mikrozentren für eine katalytische Reaktion dienen, wobei an den einzelnen Zentren wiederholt eine Oxidation von NO zu NO₂ bzw. in umgekehrter Richtung eine Reduktion erfolgt. Möglich ist es insbesondere aber auch, dass die Beschichtung nur Palladium, nicht jedoch Platin und/oder weitere Metalle enthält. Mit dieser ausschließlich auf Palladium basierenden Variante konnten überraschend gute Ergebnisse erzielt werden.

Von Vorteil ist es des Weiteren, wenn die erste Zone eine untere Beschichtungslage aufweist, die als Wash-coat-Beschichtungslage ausgebildet ist und auf der eine Platin und/oder Palladium enthaltende obere Beschichtungslage abgeschieden ist. Die Wash-coat-Beschichtungslage dient dabei einer guten Haftung der metallischen Beschichtung bzw. Metallpartikel am Partikelfilter. Diesbezüglich kann insbesondere vorgesehen sein, dass die Wash-coat-Beschichtungslage mit Titandioxid, Ceroxid, Lanthanoxid und optional Eisenoxid gebildet ist oder aus diesen besteht. Eine derartige untere Beschichtungslage hat sich als besonders vorteilhaft für eine dauerhafte Belastung des Partikelfilters erwiesen. Dabei ist es von Vorteil, dass die Wash-coat-Beschichtungslage überwiegend mit Titandioxid und Ceroxid gebildet ist, wohingegen Lanthanoxid und Eisenoxid in geringeren Anteilen vorliegen können. Insbesondere kann vorgesehen sein, dass die Wash-coat-Beschichtungslage mehr als 20 Gewichtsprozent (Gew.-%) Titandioxid und mehr als 5 Gew.-% Ceroxid enthält.

Bevorzugt ist es auch, dass die obere Beschichtungslage außer Platin und/oder Palladium im Wesentlichen keine weiteren Übergangsmetalle enthält. Die zwei genannten metallischen Elemente sind ausreichend, um die erfindungsgemäßen Wirkungen zu erzielen. Es versteht sich allerdings, dass herstellungsbedingte Verunreinigungen vorhanden sein können. Dabei ist eine Konzentration von Platin und Palladium bei Vorliegen beider Elemente relativ zueinander so gewählt, dass eine Konzentration von Platin vorzugsweise größer als eine Konzentration von Palladium ist. Dies hat sich in Versuchen als zweckmäßig erwiesen und kann dadurch begründet werden, dass in der ersten Zone funktional eine Verbrennung von Rußpartikeln im Vordergrund steht und daher der Platinanteil, der für eine Oxidation des NO sorgt, überwiegen soll.

Eine Beschichtung der zweiten Zone kann beliebig ausgebildet sein, solange die erfindungsgemäßen Wirkungen erzielt werden, insbesondere NO zumindest teilweise reduziert wird, um einen NOₓ-Anteil im austretenden Abgas zu reduzieren. Es hat sich jedoch durchaus überraschend gezeigt, dass die zweite Zone bloß mit einer einlagigen Beschichtung ausgebildet sein kann. Dabei kann die Beschichtung der zweiten Zone Titandioxid, Eisenoxid, Vanadiumoxid und Wolframoxid enthalten oder aus diesen bestehen. Vanadiumoxid und Wolframoxid können einzeln oder zusammen auch durch Manganoxid und/oder Kupferoxid ersetzt sein. Gegebenenfalls kann auch zumindest ein Seltenerdmetall vorliegen. Eine derartige einlagige Beschichtungslage in der zweiten Zone sorgt für eine effiziente NO-Reduktion.

Eine Länge der einzelnen Beschichtungsabschnitte bzw. der ersten und der zweiten Zone kann auf den jeweiligen Einsatzzweck abgestimmt sein. Zweckmäßig ist es, dass eine Länge der ersten Zone 50 % bis 200 % einer Länge der zweiten Zone beträgt.

Die zweite Aufgabe der Erfindung wird dadurch gelöst, dass ein Katalysator der eingangs genannten Art mit einer Beschichtung ausgebildet ist, die als untere Beschichtungslage eine Wash-coat-Beschichtungslage aufweist, auf welcher Palladium abgeschieden ist. Ein Vorteil eines erfindungsgemäßen Katalysators ist insbesondere darin zu sehen, dass dieser im Zusammenwirken mit einem nachgeschalteten erfindungsgemäßen Partikelfilter für eine effiziente Reinigung eines Abgases sorgen kann. Am Katalysator wird insbesondere bei Einsatz in einem Abgastrakt eines dieselbetriebenen Kraftfahrzeuges eine Reduktion von HC-Anteilen, CO-Anteilen sowie NO₂-Anteilen erreicht. Die Kohlenwasserstoffe werden ebenso wie CO oxidiert. Gleichzeitig wird auch ein NOₓ-Anteil im Ausmaß von etwa 5 % reduziert.

Eine Konzentration von Palladium ist am Katalysator bevorzugt besonders hoch und beträgt mit Vorteil, bezogen auf ein Katalysatorvolumen, mehr als 150 gm⁻³. Derartig hohe Konzentrationen haben sich als zweckmäßig in Bezug auf eine Abgasreinigung erwiesen. Insbesondere kann Palladium als einziges Metall, abgesehen von Verunreinigungen, vorgesehen sein.

Vorzugsweise ist vorgesehen, dass die Wash-coat-Beschichtungslage Zirconoxid enthält oder überwiegend aus diesem besteht. Dabei kann vorgesehen sein, dass die Wash-coat-Beschichtungslage mehr als 50 Gew.-% Zirconoxid enthält und der Rest aus Siliciumoxid und Aluminiumoxid gebildet ist.

Der erfindungsgemäße Katalysator wird bevorzugt mit einem nachgeschalteten Partikelfilter eingesetzt, kann aber auch in einem von einem Abgasstrom durchströmten Abgastrakt einer Verbrennungskraftmaschine eingesetzt werden, insbesondere eines Abgastraktes eines Dieselmotors, wobei im Abgastrakt vor dem Katalysator ein Partikelfilter und/oder eine SCR-Einrichtung vorgesehen ist. Bei dieser Anordnung mit vorgeschaltetem Partikelfilter und/oder einer vorgeschalteten SCR-Einrichtung kommt zum Tragen, dass ein erfindungsgemäßer Katalysator für eine NO₂-Reduktion sorgt und somit als Sperrkatalysator wirkt.

Ganz allgemein kann der Katalysator in einem von einem Abgasstrom durchströmten Abgastrakt einer Verbrennungskraftmaschine eingesetzt werden, insbesondere eines Abgastraktes eines Dieselmotors, um NO₂-Anteile im Abgastrakt zu verringern.

Das weitere Ziel der Erfindung wird erreicht, wenn bei einer Einrichtung der eingangs genannten Art der Partikelfilter und der Katalysator erfindungsgemäß ausgebildet sind. Dabei kann gegebenenfalls am Katalysator auch eine Zonenbeschichtung vorgesehen sein, wobei unterschiedliche Zonen mit den gleichen Materialien, aber in unterschiedlicher Konzentration beschichtet sein können.

Ein mit einer erfindungsgemäßen Einrichtung erzielter Vorteil ist darin zu sehen, dass HC-Anteile, CO-Anteile und Rußpartikel effizient aus einem Abgas eines dieselbetriebenen Kraftfahrzeuges entfernt werden können und darüber hinaus auch ein NOₓ-Anteil im austretenden Abgas signifikant reduziert ist. Somit ist insgesamt eine effiziente Abgasreinigung gegeben.

Von Vorteil ist es, wenn dem Katalysator ein NOₓ-Speicherkatalysator vorgeschaltet ist.

Weitere Merkmale, Vorteile und Wirkungen der Erfindung ergeben sich anhand des nachfolgend dargestellten Ausführungsbeispiels. In den Zeichnungen, auf welche dabei Bezug genommen wird, zeigen:
Fig. 1 eine schematische Darstellung einer erfindungsgemäßen Einrichtung;
Fig. 2 ein Diagramm betreffend eine Reduktion eines NOₓ-Anteils in einem Abgas eines dieselbetriebenen Kraftfahrzeuges.

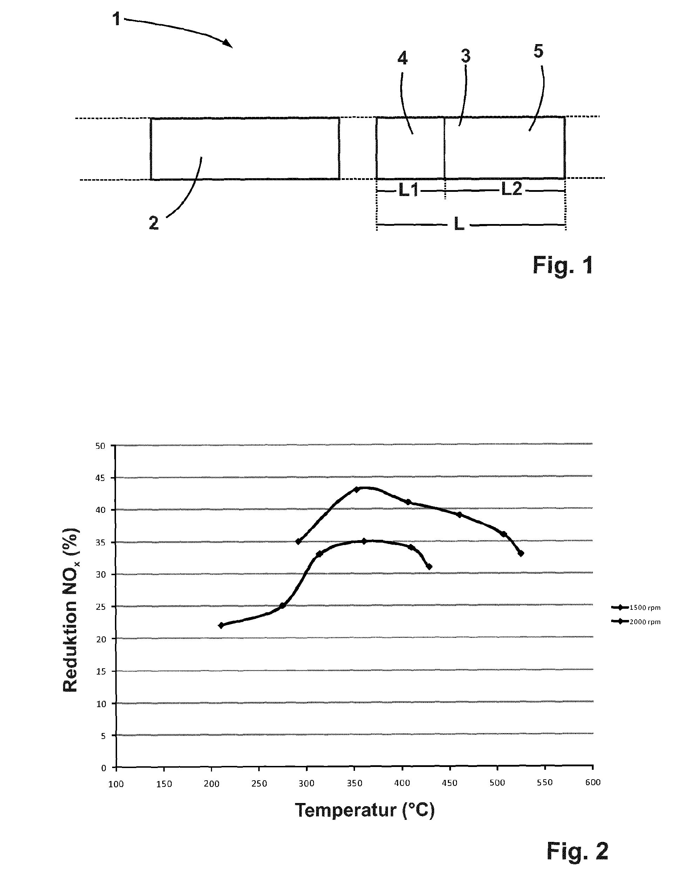

In Fig. 1 ist ein schematischer Aufbau einer erfindungsgemäßen Einrichtung 1 dargestellt. Die Einrichtung 1 ist üblicherweise in einem schematisch angedeuteten Abgastrakt eines dieselbetriebenen Kraftfahrzeuges angeordnet. Die Einrichtung 1 umfasst im Wesentlichen zwei Komponenten, nämlich einen Katalysator 2 und einen dem Katalysator 2 in Richtung eines strömenden Abgases nachgeschalteten Partikelfilter 3. Der Partikelfilter 3 ist vom Wall-flow-Typ. Das heißt, dass es sich um einen Filter handelt, der mit einer Vielzahl von parallelen, sich in Strömungsrichtung des Abgases erstreckenden Kanälen ausgebildet ist, wobei die Kanäle an den Enden des Partikelfilters 3 wechselseitig verschlossen sind. Das strömende Abgas kann den Filter jedoch passieren, da dieser im Bereich der innenliegenden Kanäle mit einer porösen Wandstruktur ausgebildet ist, sodass das Abgas zunächst in einen Kanal eintritt, dann eine Kanalwand passiert und schließlich am Ende des Filters wieder austritt. Derartige Komponenten vom Wall-flow-Typ sind üblicherweise aus einer Keramik gefertigt und als solche aus dem Stand der Technik bekannt. Gleichwohl ist das erfindungsgemäße Konzept nicht auf entsprechende Filter beschränkt, sondern kann auch dann angewendet werden, wenn der Partikelfilter 3 aus anderen Materialien besteht, beispielsweise Metallgeflechten, Metallschäumen oder Vliesen, die Abgastemperaturen von bis zu etwa 500 °C standhalten können.

Der Katalysator 2 weist eine Grundstruktur aus gasdurchlässigen Metallfolien oder einer insbesondere offenporigen Keramik und eine Wash-coat-Beschichtungslage auf, die mehr als 50 Gew.-% Zirconoxid sowie Siliciumoxid und Aluminiumoxid als Rest aufweist, wobei ein Siliciumoxidanteil den Aluminiumoxidanteil übersteigt. Auf dieser unteren Wash-coat-Beschichtungslage ist eine obere Beschichtungslage abgeschieden, die im Wesentlichen aus Palladium besteht. Die Konzentration des Palladiums beträgt mehr als 150 gm⁻³.

Der dem Katalysator 2 nachgeschaltete Partikelfilter 3 ist wie erwähnt vom Wall-flow-Typ und weist eine erste Zone 4 und eine stromabwärts nachfolgende zweite Zone 5 auf. Der Partikelfilter 3 hat eine Länge L, wobei sich die erste Zone 4 über eine Länge L1 und die zweite Zone 5 über eine Länge L2 erstrecken. Im schematischen Ausführungsbeispiel ergänzen sich die Längen L1, L2 zur (Gesamt-)Länge L. Gleichwohl kann auch vorgesehen sein, dass die erste Zone 4 von der zweiten Zone 5 beabstandet angeordnet ist, wobei der Bereich zwischen den Zonen 4, 5 wie die Zonen 4, 5 selbst beschichtet sein kann. Die erste Zone 4 umfasst eine untere Beschichtungslage, die als Wash-coat-Beschichtungslage ausgebildet ist. Diese untere Beschichtungslage weist eine Zusammensetzung mit mehr als 20 Gew.-% Titandioxid und mehr als 5 % Ceroxid auf. Der Rest der unteren Beschichtungslage wird z. B. aus Lanthanoxid und optional Eisenoxid gebildet. Auf der unteren Beschichtungslage bzw. der Wash-coat-Beschichtungslage ist eine obere Beschichtungslage abgeschieden, die abgesehen von Verunreinigungen nur aus Platin und Palladium besteht. Dabei beträgt eine Konzentration von Platin beispielsweise etwa bis zu 2000 gm⁻³. Eine Konzentration von Palladium ist üblicherweise geringer als eine Konzentration von Platin und beträgt beispielsweise bis zu 1500 gm⁻³. Die zweite Zone 5 hingegen weist bloß eine einzige Beschichtungslage auf, die aus Titandioxid, Eisenoxid, Vanadiumoxid und Wolfram gebildet ist. Typischerweise beträgt ein Titandioxidanteil mehr als 60 Gew.-%. Eisenoxid, Vanadiumoxid und Wolframoxid liegen bevorzugt in einem Anteil von jeweils bis zu 10 Gew.-% vor. Vanadiumoxid und Wolframoxid können einzeln oder zusammen auch durch Manganoxid und/oder Kupferoxid ersetzt sein, wobei ein Gehalt dieser alternativen Komponenten entsprechend angepasst ist. Darüber hinaus liegt zweckmäßigerweise noch zumindest ein Seltenerdmetall mit einem Anteil von bis zu 2 Gew.-% vor.

In der in Fig. 1 dargestellten Einrichtung 1 dient der Katalysator 2 vornehmlich der Oxidation von HC-Anteilen sowie einer Oxidation von CO zu CO₂. Der Katalysator 2 kann auch alleine als NO₂-Sperrkatalysator angewendet werden. Nicht dargestellt, aber vorgesehen sein kann, dass die Einrichtung 1 zusätzlich ein sogenanntes HC-Dosing-System umfasst. Das HC-Dosing-System dient einer Einspritzung von Kraftstoff aus dem Tank des Kraftfahrzeuges, um den Partikelfilter 3 bei Bedarf durch Verbrennung des Kraftstoffes zu erhitzen und damit eine aktive Regeneration des Partikelfilters 3 einzuleiten. Sofern ein HC-Dosing-System vorgesehen ist, erfolgt eine Einspritzung des Kraftstoffes vor dem Katalysator 2 und dem Partikelfilter 3. Darüber hinaus ist es auch möglich, dass eine in Fig. 1 dargestellte Einrichtung 1 einen NOₓ-Speicherkatalysator umfasst, der Stickoxide mit Barium- oder Kaliumverbindungen kurzfristig bindet und zudem mit einem Edelmetall wie Platin beschichtet ist. Der NOₓ-Speicherkatalysator ist dann vorzugsweise vor dem Katalysator 2 angeordnet. Der NOₓ-Speicherkatalysator und der Partikelfilter 3 werden gemeinsam durch HC-Einspritzung regelmäßig regeneriert.

Eine Einrichtung 1 wie in Fig. 1 dargestellt und mit einem HC-Dosing-System wurde auf einem Motorprüfstand hinsichtlich einer Abgasreinigung untersucht bzw. geprüft. Die Prüfungen erfolgten an einem OM 904 LA Mercedes Benz Nutzfahrzeugmotor. Dabei wurden die in der nachfolgenden Tabelle 1 ersichtlichen Messwerte erhalten.

**Tabelle 1 - Abgaswerte**

| **Rohemissionen ETC** | | | | | | |
|---|---|---|---|---|---|---|
| **NOₓ [g/kWh]** | **NO₂ [g/kWh]** | **NO [g/kWh]** | **CO [g/kWh]** | **HC [g/kWh]** | **CO₂ [g/kWh]** | **PM [g/kWh]** |
| 4,069 | 0,120 | 3,949 | 1,878 | 0,085 | 614,15 | 0,092 |

| **Rohemissionen ESC** | | | | | | |
|---|---|---|---|---|---|---|
| **NO. [g/kWh]** | **NO₂ [g/kWh]** | **NO [g/kWh]** | **CO [g/kWh]** | **HC [g/kWh]** | **CO₂ [g/kWh]** | **PM [g/kWh]** |
| 3,873 | 0,149 | 3,724 | 0,546 | 0,057 | 626,05 | 0,072 |

| **Emissionen ETC mit Einrichtung 1** | | | | | | |
|---|---|---|---|---|---|---|
| **NO. [g/kWh]** | **NO₂ [g/kWh]** | **NO [g/kWh]** | **CO [g/kWh]** | **HC [g/kWh]** | **CO₂ [g/kWh]** | **PM [g/kWh]** |
| 2,920 | 0,044 | 2,975 | 0,11 | 0,01 | 623,7 | 0,003 |

| **Emissionen ESC mit Einrichtung 1** | | | | | | |
|---|---|---|---|---|---|---|
| **NO. [g/kWh]** | **NO₂ [g/kWh]** | **NO [g/kWh]** | **CO [g/kWh]** | **HC [g/kWh]** | **CO₂ [g/kWh]** | **PM [g/kWh]** |
| 2,759 | 0,076 | 2,683 | 0,013 | 0,002 | n. a. | 0,0041 |

Wie aus Tabelle 1 ersichtlich ist, konnten die Rohemissionen bei einem European Transient Cycle (ETC) sowie einem European Stationary Cycle (ESC) deutlich verringert werden. Insbesondere ist aus Tabelle 1 ersichtlich, dass sowohl CO-Anteile als auch HC-Anteile deutlich reduziert werden können. Das Gleiche trifft auch für Rußpartikel (PM) zu, die im Wesentlichen vollständig gefiltert werden. Schließlich ist auch ein NOₓ-Anteil signifikant reduziert, wobei sowohl NO₂-Anteile als auch NO-Anteile verringert sind. Im Unterschied zum Stand der Technik werden somit der Gesamtgehalt an NOₓ, aber auch NO₂ und NO jeweils gesondert anteilsmäßig reduziert. Dies ist in Fig. 2 für einen weiteren Test für verschiedene Belastungsstufen eines Motors und über verschiedene Temperaturbereiche des eintretenden Gases dargestellt.

Der Katalysator 2 und der Partikelfilter 3 können in einem Abgastrakt eines Kraftfahrzeuges bereits bei der Auslieferung vorgesehen sein oder auch nachgerüstet werden. In beiden Fällen erweist es sich als zweckmäßig, wenn der Katalysator 2 und der Partikelfilter 3 im Abgastrakt mittels einer Dämpfungsmatte oder allgemein eines dämpfenden Elementes am Abgastrakt gelagert werden. Wird der Katalysator 2 als Sperrkatalysator eingesetzt oder nachgerüstet, ist es zweckmäßig, wenn dessen Grundkörper von seitlichen Blechen eingefasst ist, welche sich radial erstrecken und gasundurchlässig sind. Die seitlichen Bleche, die vorzugsweise aus einem Stahl gebildet sind, erlauben eine einfache Befestigung des Katalysators 2 in einem Abgastrakt. Hierfür braucht bloß der Abgastrakt aufgeschnitten und der Katalysator 2 eingesetzt werden. Die seitlichen Bleche stehen dann nach Wiederverbinden des Abgastraktes vor und erlauben eine Fixierung, z. B. mit einer um den Abgastrakt geführten Schelle.

## Patentansprüche

1. Beschichteter Partikelfilter (3), insbesondere Wall-flow-Filter, mit einer Länge (L), **dadurch gekennzeichnet, dass** entlang der Länge (L) zumindest zwei Zonen (4, 5) vorgesehen sind, die unterschiedlich beschichtet sind.

2. Beschichteter Partikelfilter (3) nach Anspruch 1, **dadurch gekennzeichnet, dass** eine erste Zone (4) und eine zweite Zone (5) vorgesehen sind, wobei die zweite Zone (5) eine NO zumindest teilweise reduzierende Zone (5) ist.

3. Beschichteter Partikelfilter (3) nach Anspruch 1 oder 2, **dadurch gekennzeichnet, dass** die erste Zone (4) eine Platin und/oder Palladium enthaltende Beschichtung aufweist.

4. Beschichteter Partikelfilter (3) nach Anspruch 3, **dadurch gekennzeichnet, dass** die erste Zone (4) eine untere Beschichtungslage aufweist, die als Wash-coat-Beschichtungslage ausgebildet ist und auf der eine Platin und/oder Palladium enthaltende obere Beschichtungslage abgeschieden ist.

5. Beschichteter Partikelfilter (3) nach Anspruch 4, **dadurch gekennzeichnet, dass** die Wash-coat-Beschichtungslage mit Titandioxid, Ceroxid, Lanthanoxid und optional Eisenoxid gebildet ist oder aus diesen besteht.

6. Beschichteter Partikelfilter (3) nach Anspruch 5, **dadurch gekennzeichnet, dass** die Wash-coat-Beschichtungslage mehr als 20 Gew.-% Titandioxid und mehr als 5 Gew.-% Ceroxid enthält.

7. Beschichteter Partikelfilter (3) nach einem der Ansprüche 4 bis 6, **dadurch gekennzeichnet, dass** die obere Beschichtungslage außer Platin und/oder Palladium im Wesentlichen keine weiteren Übergangsmetalle enthält.

8. Beschichteter Partikelfilter (3) nach einem der Ansprüche 4 bis 7, **dadurch gekennzeichnet, dass** Platin und Palladium vorliegen und eine Konzentration von Platin vorzugsweise größer als eine Konzentration von Palladium ist.

9. Beschichteter Partikelfilter (3) nach einem der Ansprüche 1 bis 8, **dadurch gekennzeichnet, dass** die zweite Zone (5) mit einer einlagigen Beschichtung ausgebildet ist.

10. Beschichteter Partikelfilter (3) nach Anspruch 9, **dadurch gekennzeichnet, dass** die Beschichtung der zweiten Zone (5) Titandioxid, Eisenoxid, Vanadiumoxid und Wolframoxid enthält oder aus diesen besteht, wobei Vanadiumoxid und Wolframoxid durch Manganoxid und/oder Kupferoxid ersetzt sein können.

11. Beschichteter Partikelfilter (3) nach einem der Ansprüche 1 bis 10, **dadurch gekennzeichnet, dass** eine Länge (L1) der ersten Zone (4) 50 % bis 200 % einer Länge (L2) der zweiten Zone (5) beträgt.

12. Katalysator (2), der von Abgasen durchströmbar ist, **dadurch gekennzeichnet, dass** der Katalysator (2) mit einer Beschichtung ausgebildet ist, die als untere Beschichtungslage eine Wash-coat-Beschichtungslage aufweist, auf welcher Palladium abgeschieden ist.

13. Katalysator (2) nach Anspruch 12, **dadurch gekennzeichnet, dass** die Wash-coat-Beschichtungslage Zirconoxid enthält oder überwiegend aus diesem besteht.

14. Verwendung eines Katalysators (2) nach Anspruch 12 oder 13 in einem von einem Abgasstrom durchströmten Abgastrakt einer Verbrennungskraftmaschine, insbesondere eines Abgastraktes eines Dieselmotors, wobei im Abgastrakt vor dem Katalysator (2) ein Partikelfilter und/oder eine SCR-Einrichtung vorgesehen ist.

15. Verwendung eines Katalysators (2) nach Anspruch 12 oder 13 in einem von einem Abgasstrom durchströmten Abgastrakt einer Verbrennungskraftmaschine, insbesondere eines Abgastraktes eines Dieselmotors, zur Verringerung von NO₂-Anteilen im Abgastrakt.

16. Einrichtung (1) zum Reinigen von Abgasen, insbesondere Abgasen von dieselbetriebenen Kraftfahrzeugen, umfassend einen Katalysator (2) und einen dem Katalysator (2) stromabwärts nachgeschalteten beschichteten Partikelfilter (3) mit einer Länge (L), **dadurch gekennzeichnet, dass** der Partikelfilter (3) nach einem der Ansprüche 1 bis 11 und der Katalysator (2) nach Anspruch 12 oder 13 ausgebildet ist.

17. Einrichtung (1) nach Anspruch 14, **dadurch gekennzeichnet, dass** dem Katalysator ein NOₓ-Speicherkatalysator vorgeschaltet ist.
